# EUROPÄISCHE PATENTSCHRIFT

(11) **EP 0 691 796 B1**
(45) Veröffentlichungstag und Bekanntmachung des Hinweises auf die Patenterteilung: **23.05.2001**
(21) Anmeldenummer: 95104363.7
(22) Anmeldetag: 24.03.1995
(51) Int. Cl.: H04Q 11/04, H04Q 3/62, H04M 3/56

(54) **Netzabschlusseinrichtung**
Network termination
Dispositif de terminaison de réseau

(30) Priorität: 07.07.1994 CH 216994
(43) Veröffentlichungstag der Anmeldung: 10.01.1996
(73) Patentinhaber: Siemens Schweiz AG, 8047 Zürich (CH)
(72) Erfinder: Rippstein, Eugen, CH-8904 Aesch (CH)

(56) Entgegenhaltungen:
- EP-A- 0 495 423
- EP-A- 0 555 015
- EP-A- 0 585 480
- EP-A- 0 668 706
- US-A- 5 321 744
- PHILIPS TELECOMMUNICATION AND DATA SYSTEMS REVIEW (PTR), Bd. 48, Nr. 1, Seiten 20-27, XP000116333 BOLTJES C J: "FACILITIES FOR USERS OF SOPHO-SET FEATURE PHONES"

## Beschreibung

Die vorliegende Erfindung betrifft eine Netzabschlusseinrichtung nach dem Oberbegriff des Patentanspruchs 1.

Die Einführung der ISDN-Kommunikationssysteme erlaubt dem Anwender die Nutzung verschiedener Dienste über (Teilnehmer-) Endgeräte, die über eine einzelne für den Anwender vorgesehene Schnittstelle, normalerweise eine U-Schnittstelle, und einen Basisanschluss mit dem ISDN-Netz verbunden sind. Gemäss P. Pribilla, ISDN im Büro, Siemens Aktiengesellschaft, Berlin 1985, Seite 20, Bild 3, ist das Ziel der Entwicklung ein multifunktionales Arbeitsplatzsystem, durch das dem Anwender alle benötigten Dienste (Standarddienste wie Fernsprechen, Fernschreiben, Fernkopieren, etc. sowie höhere Dienste) über ein hochintegriertes Ein- Ausgabegerät zugänglich sind. Die Kommunikation zwischen den verschiedenen Diensten am Arbeitsplatz, z.B. vom Fernschreiber auf den Femkopierer, wird aus naheliegenden Gründen nicht benötigt und ist daher konzeptionell nicht vorgesehen.

In EP 0 585 480 ist ein Verfahren zur Herstellung von Konferenzverbindungen in einer Nebenstellenanlage beschrieben, mit welchem Verfahren die Konferenzteilnehmer eine individuelle Sprache auswählen können. Aus US 5.321.744 ist eine in einem Personalcomputer enthaltene Vermittlungsvorrichtung zu entnehmen, die mit Hilfe der weiteren Ressourcen des Personalcomputers programmiert und betrieben werden kann. In EP 0 555 015 ist eine ISDN-Netzabschlusseinrichtung offenbart, an der analoge Sprachendgeräte und digitale Datenendgeräte wie z.B. Terminals oder Personalcomputer anschliessbar sind.

Verschiedene Endgeräte, die an derselben ISDN-Schnittstelle angeschlossen sind und zur Nutzung desselben Dienstes verwendet werden, können daher weder miteinander kommunizieren noch flexibel auf Gespräche eintreten, die über die ISDN-Schnittstelle eintreffen.

Eine der Erfindung zugrundeliegende Aufgabe ist daher, eine Netzabschlusseinrichtung zu schaffen, die dem Anwender die Möglichkeit zur flexibleren Nutzung seiner mit demselben ISDN-Basisanschluss verbundenen und für denselben Dienst vorgesehenen Endgeräte zu schaffen.

Teilnehmer mit internen Telefon-Endgeräten sollen z.B. derart in Gruppen zusammengefasst werden können, dass ein externer Anruf von jedem Teilnehmer der Gruppe übernommen und weitervermittelt werden kann. Innerhalb der Gruppe sollen vorzugsweise Prioritäten zuteilbar sein, so dass z.B. ein externer Anruf zuerst zum ersten Gruppenmitglied gelangt und erst auf den weiteren Endgeräten signalisiert wird, falls dieses Gruppenmitglied abwesend ist. Weiterhin soll die gegenseitige Kommunikation der mit derselben ISDN-Schnittstelle verbundenen internen Telefon-Endgeräte ermöglicht werden.

Vorzugsweise soll die Netzabschlusseinrichtung zur Schaltung von Konferenzgesprächen zwischen internen und externen Gesprächsteilnehmern geeignet sein. Die Zugangsberechtigung zu geführten Gesprächen, insbesondere zu Konferenzgesprächen, soll ebenfalls durch die Vergabe von Prioritäten einstellbar sein.

Diese Aufgabe wird durch die im Patentanspruch 1 angegebenen Massnahmen gelöst. Vorteilhafte Ausgestaltungen der Erfindung sind in weiteren Ansprüchen angegeben.

Durch den Einbau eines leitungsvermittelnden Koppelnetzes in die mit der ISDN-Schnittstelle verbundene Netzabschlusseinrichtung können mit Sonderfunktionstasten versehene Telefon-Endgeräte flexibel miteinander kommunizieren und auf eintreffende Anrufe eintreten. Die benötigten Leistungsmerkmale lassen sich dabei nach Bedarf einrichten. Die am Netzabschluss anzuschliessenden Endgeräte können Standard-ISDN-Geräte, analoge Endgeräte oder Sonderendgeräte sein, die über Sonderfunktionen verfügen. Standard-ISDN-Endgeräte mit Sonderfunktionstasten sind u.U. jedoch erst in Zukunft erhältlich. Diese Geräte könnten dann über die S-Schnittstelle mit der erfindungsgemässen Netzabschlusseinrichtung verbunden werden.

Bei der Verwendung von analogen Endgeräten, die momentan noch in vielen Haushalten vorhanden sind, sind durch die erfindungsgemässe Netzabschlusseinrichtung vorzugsweise zwei analoge und sechs digitale Endgeräte mit einer U-Schnittstelle des ISDN verbindbar. Mehrere analoge und/oder digitale Endgeräte können daher mittels einem Konferenzbaustein gleichzeitig mit einem oder zwei externen und/oder weiteren internen Anrufern verbunden werden.

Die Erfindung wird nachfolgend anhand einer Zeichnung beispielsweise näher erläutert. Dabei zeigt:
- Fig. 1: das Blockschaltbild einer erfindungsgemässen Netzabschlusseinrichtung,
- Fig. 2: mit Sonderfunktionstasten versehene und mit der erfindungsgemässen Netzabschlusseinrichtung verbundene Endgeräte,
- Fig. 3: eine erfindungsgemässe Netzabschlusseinrichtung, die mit zwei analogen Endgeräten verbunden ist und
- Fig. 4: eine ab-Schnittstellen-Baugruppe der mit zwei analogen Endgeräten verbundenen Netzabschlusseinrichtung.

In A. Kanbach / A. Körber, ISDN - Die Technik, Hüthig Verlag, Heidelberg 1990, Seiten 32 - 34, wird die Struktur des ISDN-Teilnehmeranschlusses beschrieben. In H. E. Martin, Kommunikation mit ISDN, Markt & Technik Verlag, München 1988, ist auf Seite 150 der Aufbau einer bekannten Netzabschlusseinrichtung NT12 angegeben, die aus einer Echokompensationsbaugruppe IEC und einer Schnittstellenbaugruppe SBCX besteht und die netzseitig eine U-Schnittstelle und teilnehmerseitig eine S-Schnittstelle aufweist. Die über die U-Schnittstelle U-SST und eine Zweidrahtleitung mit der Vermittlungszentrale verbundene Echokompensationsbaugruppe IEC ermöglicht die Übertragung von Daten im Gleichlageverfahren (s. Dr. H. E. Martin, Kommunikation mit ISDN, Markt & Technik Verlag, München 1988, Seite 105, Bild 6.15). Die übertragenen Daten sind standardmässig einem von zwei digitalen Sprachkanälen (B-Kanäle) und einem digitalen Signalisierungskanal (D-Kanal) zugeordnet. Durch die Echokompensationsbaugruppe IEC (ISDN Echo Cancellation Circuit) erfolgt daher die Anpassung an die Übertragungsstrecke und durch die Schnittstellenbaugruppe SBCX erfolgt die Anpassung an die Normen der S-Schnittstelle, an die bekannte ISDN-Endgeräte anschliessbar sind.

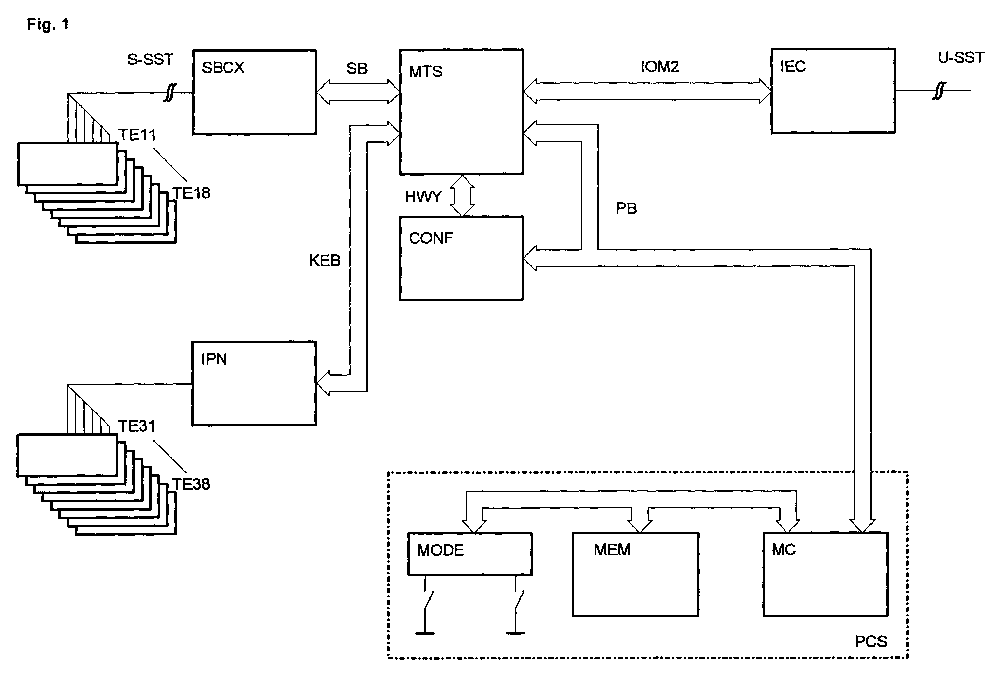

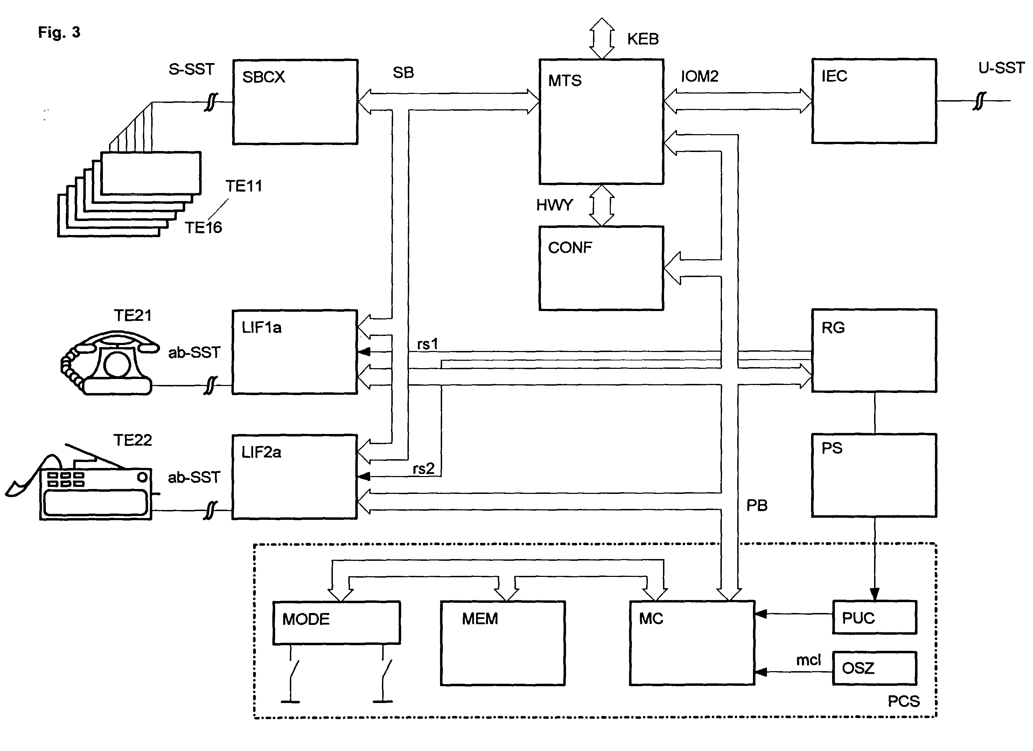

In der in Fig. 1 gezeigten Netzabschlusseinrichtung ist eine U-Schnittstelle des ISDN über eine Echokompensationsbaugruppe IEC und ein erstes Bussystem IOM2 mit einem leitungsvermittelnden Koppelnetz MTS verbunden. Ein zweites Busssystem PB (Prozessorbus) verbindet das Koppelnetz MTS mit einem Prozessorsystem PCS, welches durch einen Prozessor MC, eine Speicherbaugruppe MEM, einen Oszillator OSZ und eine zur Einstellung der Betriebsart vorgesehene Schalteinheit MODE gebildet wird. Vorzugsweise ist der Prozessor MC zur Stromversorgung direkt sowie über einen Power-up-Controller PUC mit der Stromversorgungseinheit PS verbunden (siehe Fig. 3). Das Koppelnetz MTS ist über ein drittes Bussystem KEB und eine für die Anpassung der Endgeräte an das Übertragungsmedium vorgesehene IPN-Schnittstellenbaugruppe mit Endgeräten TE31, ..., TE38 verbunden. Die IPN-Schnittstellenbaugruppe kann z.B. mit dem Kommunikationsbaustein PEB 2096 (Octal Transceiver for Uₚ₀ Interfaces / OCTAT-P). Dieser Baustein ermöglicht die elektrische und funktionelle Verbindung zwischen analogen Uₚ₀ Schnittstellen und der IOM (ISDN-Oriented Modular) - Schnittstelle. Das Koppelnetz MTS kann ferner über ein weiteres Bussystem SB und eine S-Schnittstellenbaugruppe SBCX mit ISDN-Endgeräten TE11, ..., TE18 verbunden sein. Normalerweise sind jedoch nur die ISDN-Endgeräte TE11, ..., TE18 oder die Endgeräte TE31, ..., TE38 mit dem zugehörigen Bussystem SB bzw. KEB vorhanden. Die Bussysteme SB und KEB sind normalerweise identisch zum Bussystem IOM2. Die Erfindung wird nachfolgend daher nur für die über das Bussystem KEB verbundenen Endgeräte TE31, ..., TE38 erläutert.

Nach dem Zeitmultiplexverfahren arbeitende leitungsvermittelnde Koppelnetze werden z.B. in P. R. Gerke, Digitale Kommunikationsnetze, Springer Verlag, Heidelberg 1991, Kapitel 3.2.3 beschrieben. Durch das leitungsvermittelnde Koppelnetz werden Zeitschlitze (Kanäle) aus ankommenden Übertragungssystemen unmittelbar auf Zeitschlitze (Kanäle) in abgehenden Übertragungssystemen umgesetzt. Die zeitliche Verschiebung der in den Zeitschlitzen enthaltenen Informationen wird im Prinzip durch das sogenannte Zeitlagenvielfach realisiert. Dieses bewirkt die Auflösung des "zeitlichen Nacheinanders" in ein "räumliches Untereinander", aus dem wiederum ein wahlweises "zeitliches Nacheinander" erzeugt wird. Über die U-Schnittstelle eintreffende Anrufe können daher nicht nur an einen Adressaten, sondern an mehrere Endgeräte vermittelt werden. Beispielsweise können Arbeitsgruppen gebildet werden, denen die Endgeräte TE31, TE33, TE37 und TE38 bzw. die Endgeräte TE32, TE34 und TE35 zugeordnet sind. Das leitungsvermittelnde Koppelnetz setzt daher die Informationen, die im Zeitschlitz des Anrufers enthalten sind, in die Zeitschlitze um, die den betreffenden Endgeräten zugeordnet sind.

Die über den D-Kanal übermittelten Signalisierungsdaten werden von der Echokompensationsbaugruppe IEC über das Koppelnetz MTS und den Prozessorbus PB an den Prozessor MC übermittelt und von diesem ausgewertet. Ferner hat der Prozessor MC über das Koppelnetz MTS Zugriff zur Echokompensationsbaugruppe IEC sowie zur Baugruppe SBCX, die vom Prozessor MC entsprechend den vorliegenden Konfigurationsdaten programmiert werden. Zur Realisierung des Koppelnetzes MTS können z.B. die Kommunikationsbausteine PEB 2055, PEB 2054 oder PEB 20550 (EPIC, EPIC-S bzw. ELIC) der Siemens AG verwendet werden. Im Kommunikationsbaustein PEB 20550 sind dabei nebst einem Baustein PEB 2055 (EPIC), der für leitungsvermittelnde Schalt- und Layer 1-Funktionen verwendet wird, Module eingebunden, die für die Bereitstellung der benötigten Layer 2 Funktionen vorgesehen sind (kommunizierende offene Systeme bzw. deren Gliederung in Schichten (Layer) werden z.B. in A. Kanbach / A. Körber, ISDN - Die Technik, Hüthig Verlag, Heidelberg 1990, Seite 53 beschrieben). Vom Prozessor MC bestimmte D-Kanal-Steuersignale können von diesen Modulen dabei direkt oder über den Baustein PEB 2055 (EPIC) an die Endgeräte TE oder ans Netz übertragen werden.

Der Prozessor MC steuert über den Prozessorbus PB ferner das Koppelnetz MTS. Falls über die U-Schnittstelle z.B. ein Anruf für das Endgerät TE31 eintrifft, veranlasst der Prozessor MC die Signalisierung aller Endgeräte TE31, TE33, TE37 und TE38, die in derselben Gruppe zusammengefasst sind. Falls z.B. der Teilnehmer mit dem Endgerät TE33 auf den Anruf eintritt, wird dies durch den Prozessor MC festgestellt und an die weiteren Endgeräte TE31, TE37 und TE38 der Gruppe gemeldet. Vorzugsweise wird das Leistungsmerkmal "Makeln" vorgesehen, so dass der Anruf auf "Halten" gelegt und einem weiteren Teilnehmer vorzugsweise derselben Gruppe übergeben werden kann. Zu diesem Zweck sind die Endgeräte TE31, ..., TE38 mit Sonderfunktionstasten zu versehen.

Vorzugsweise wird das Koppelnetz MTS ferner mit einem Konferenzbaustein CONF verbunden, so dass z.B. alle Teilnehmer einer Gruppe in ein Konferenzgespräch eintreten können. Als Konferenzbaustein CONF kann beispielsweise die Integrierte Schaltung M116 von SGS verwendet werden, die prinzipiell die Funktionen eines Signalprozessors aufweist. Ein derartiger Baustein bietet die Möglichkeit, gesteuert durch den Prozessor MC sämtliche Zeitschlitze einer Leitung (Highway) beliebig zu mischen. Die Signalisierungsdaten von und zu den Endgeräten TE bzw. von und zum Prozessor MC in den entsprechenden Zeitschlitzen werden vorzugsweise ebenfalls im Koppelnetz MTS vermittelt.

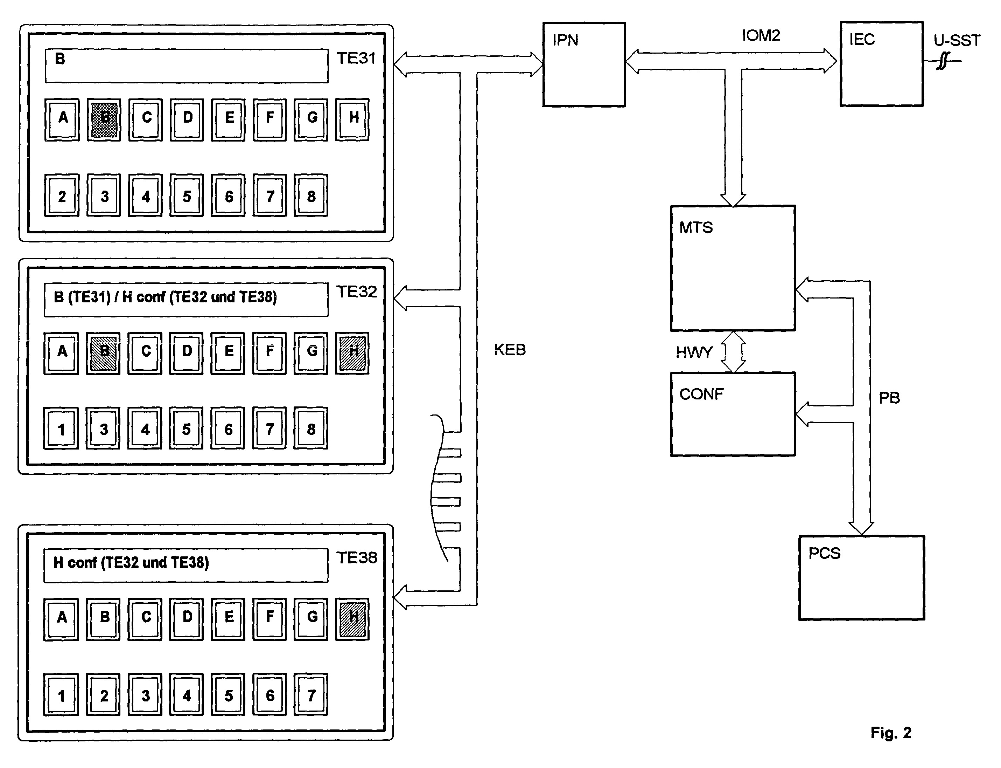

In Fig. 2 ist die erfindungsgemässe Netzabschlusseinrichtung mit drei mit dem Koppelnetz MTS verbundenen Endgeräten TE31, TE32 und TE38 dargestellt. Jedes der Endgeräte TE31, TE32 und TE38 ist z.B. mit einem Handapparat, einem Wählaggregat, einer Anzeige sowie mit 15 Sonderfunktionstasten versehen. Die Sonderfunktionstasten A, ..., H sind den Leitungen zugeordnet, die vom Koppelnetz MTS vermittelt werden. Die weiteren Sonderfunktionstasten 2, ..., 8 bzw. 1, 3, .., 8 bzw. 1, ..., 7 sind vorgesehen, um eines der weiteren Endgeräte TE32, ..., TE38 bzw. TE31, TE33, ..., TE38 bzw. TE31, ..., TE37 per Tastendruck anwählen zu können. Für die vorhandenen dem Fachmann bekannten Leistungsmerkmale (Makeln, etc.) sind bedarfsweise weitere Funktionstasten vorgesehen. Die Sonderfunktionstasten A, ..., H können auch nur teilweise vorhanden sein (z.B. könnte nur die Kombination A, B und H vorgesehen sein).

Das Eintreffen eines Anrufes über die Leitung B wird durch den Prozessor MC beispielsweise nur auf den Endgeräten TE31 und TE32 (Zweier-Gruppe) signalisiert. Dazu kann auf beiden Endgeräten TE31 und TE32 ein Rufton ausgelöst und/oder die Sonderfunktionstaste B beleuchtet werden. Durch Drükken der Taste B übernimmt der Teilnehmer mit dem Endgerät TE31 den Anruf. Dies wird, signalisiert durch den Prozessor MC, z.B. auf der Anzeige des Endgerätes TE32 oder durch eine Änderung der Beleuchtung der Taste B angezeigt. Durch die Zuordnung von Prioritäten zu den Endgeräten TE31, TE32 kann vorgesehen sein, dass der Teilnehmer mit dem Endgerät TE32 ebenfalls auf den Anruf von Leitung B eintreten kann (Konferenzgespräch mittels Konferenzbaustein CONF); falls das Endgerät TE31 über eine tiefere Priorität verfügt, ist dies im umgekehrten Fall nicht möglich. Ferner kann auch nur vorgesehen sein, dass der Teilnehmer mit dem Endgerät TE31 den Anruf an den Teilnehmer mit dem Endgerät TE32 übergeben kann (Makeln). Die Teilnehmer mit den Endgeräten TE32 und TE38, die beispielsweise eine weitere Gruppe bilden, sind mit Leitung H verbunden und führen mit dem externen Teilnehmer, der über diese Leitung (H) vermittelt wurde, ein Konferenzgespräch.

Die Ziffern der weiteren Sonderfunktionstasten entsprechen je den sieben zusätzlich vorhandenen Endgeräten (TE32, ..., TE38, TE31, TE33, ..., TE38; etc.). Mit jeder dieser Tasten kann daher ein weiteres Endgerät direkt gerufen werden. Die Signalisierung erfolgt dabei wiederum über das Koppelnetz MTS und den Prozessor MC.

Für die Endausbauphase des ISDN-Fernsprechvermittlungsnetzes, wie es beispielsweise in P. Bocker, "ISDN Das dienstintegrierende digitale Nachrichtennetzwerk", Springer Verlag, Berlin 1990, beschrieben ist, ist vorgesehen, dass nur noch digitale Endgeräte (ISDN-Endgeräte) eingesetzt werden. In den nächsten Jahren wird jedoch nebst den bereits eingeführten ISDN-Endgeräten ein grosser Anteil von analogen Endgeräten vorhanden sein. Diese konventionellen Endgeräte werden gemäss der ISDN-Spezifikation über eine ab-Schnittstelle sowie einen Terminaladapter mit der S-Schnittstelle des ISDN (Integrated Services Digital Network) verbunden (s. H. E. Martin, Kommunikation mit ISDN, Markt & Technik Verlag, München 1988, Seite 102 oder P. Bocker, "ISDN Das dienstintegrierende digitale Nachrichtennetzwerk", Springer Verlag, Berlin 1990, Seiten 29). Zwischen der mit der Vermittlungszentrale verbundenen zweiadrigen Teilnehmerleitung, bzw. der U-Schnittstelle und der S-Schnittstelle ist ferner ein ISDN-Netzabschluss (NT bzw. NT1 und NT2) vorgesehen. Der Anschluss der konventionellen Endgeräte an das ISDN gestaltet sich daher sehr aufwendig. Aus der EP-OS 0 495 423 ist ferner eine Anschlusseinrichtung bekannt, durch die zwei analoge Endgeräte kostengünstig mit einer U-Schnittstelle des ISDN verbindbar sind. Falls teilnehmerseitig jedoch sowohl analoge als auch digitale Endgeräte anzuschliessen sind, so wird, wie in P. Bocker, "ISDN Das dienstintegrierende digitale Nachrichtennetzwerk", Springer Verlag, Berlin 1990, Seite 29, Bild 2.7 gezeigt, noch immer eine mit einer U-Schnittstelle verbindbare ISDN-Netzabschlusseinrichtung benötigt, die eine S-Schnittstelle aufweist, mit der die digitalen Endgeräte direkt und die analogen Endgeräte über einen Terminaladapter (TA) zu verbinden sind.

Fig. 3 zeigt eine Netzabschlusseinrichtung mit den Bussystemen IOM2, PB, die das Koppelnetz MTS und die die Echokompensationsbaugruppe IEC bzw. das Koppelnetz MTS, den Konferenzbaustein CONF, einen Rufsignalgenerator RG und zwei ab-Schnittstellen-Baugruppen LIF1a a bzw. LIF2a mit dem Prozessor MC verbinden. Das Koppelnetz MTS ist über das Bussystem SB und die S-Schnittstellenbaugruppe SBCX einerseits sechs digitalen Endgeräten TE11, ..., TE16 sowie über das Bussystem SB und zwei ab-Schnittstellen-Baugruppen LIF1a bzw. LIF2a mit zwei analogen Endgeräten TE21, TE22 verbunden. Das Endgerät TE22 ist im vorliegenden Fall ein Telekopier-Gerät.

Durch das vom Prozessor MC gesteuerte Koppelnetz MTS werden die B-Kanäle entweder zur Baugruppe SBCX oder zu den ab-Schnittstellen-Baugruppen LIF1a bzw. LIF2a durchgeschaltet. Falls beide B-Kanäle von der Baugruppe SBCX bereits besetzt sind, kann kein Freiton an die Baugruppe LIF1a bzw. LIF2a durchgeschaltet werden. Für diesen Fall wird ein intern erzeugter Gassenbesetztton (z.B. 425 Hz) an die ab-Schnittstellen-Baugruppe LIF1a bzw. LIF2a angelegt. Vorzugsweise werden vom Prozessor MC z.B. im 8 kHz-Takt Interrupt-Signale an das Koppelnetz MTS abgegeben, wonach mit jedem Interrupt ein Abtastwert des Gassenbesetzttones über das erste Bussystem IOM2 an die ab-Schnittstellen-Baugruppe LIF1a bzw. LIF2a abgegeben wird. Auf diese Weise lassen sich weitere Töne (z.B. der Freiton) an die ab-Schnittstellen-Baugruppe LIF1a bzw. LIF2a abgegeben. Der Gassenbesetztton, Gebührenimpulse oder weitere Töne lassen sich grundsätzlich jedoch beliebig, d.h. softwaremässig oder durch Teilung aus einer Referenzfrequenz, erzeugen.

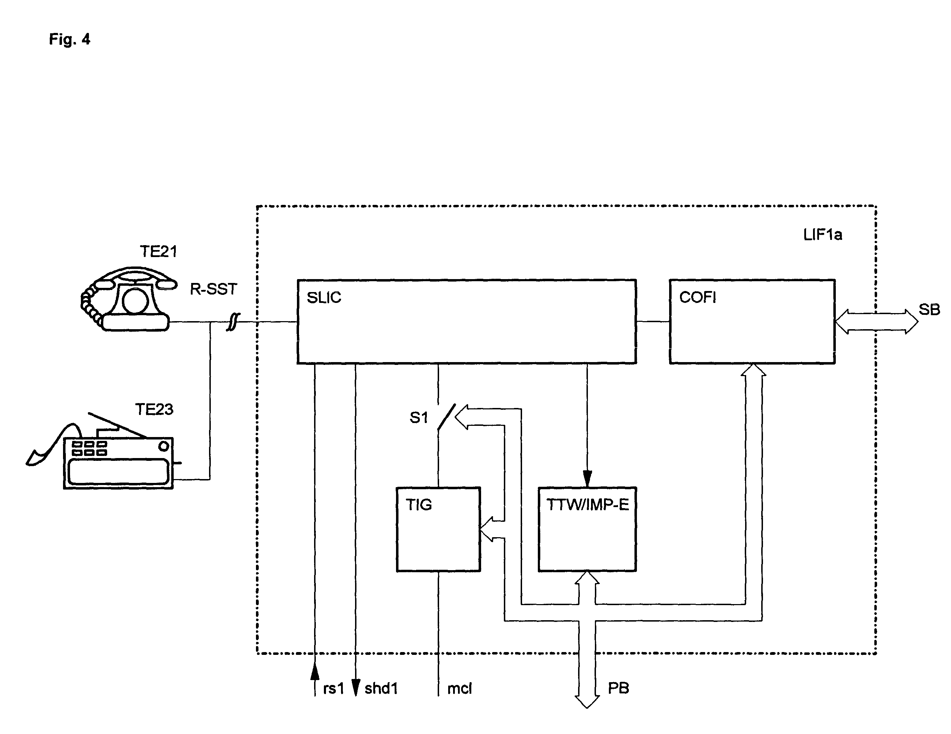

Die in Fig. 4 gezeigte mit dem analogen Endgerät TE21 und gegebenenfalls mit einem weiteren, parallel dazu vorgesehenen Endgerät TE23 (z.B. Telekopier-Gerät der Gruppe 3) verbundene Baugruppe LIF1a weist eine Wandlerbaugruppe COFI auf, die einerseits mit dem Bussystem SB und andererseits über eine Leitungsbaugruppe SLIC und die ab-Schnittstelle ab-SST mit dem Endgerät TE21 verbunden ist. Die Wandlerbaugruppe COFI dient in Richtung Endgerät als Digital/Analog- und in Richtung zum ISDN als Analog/Digital-Wandler. Die Leitungsbaugruppe SLIC ist ferner mit dem Rufspannungsgenerator RG (s. Leitungen rs1, rs2), einem Tontasten- und Impulswahl-Empfänger TTW/IMP-E sowie über einen Schalter S1 mit einem Gebührenimpuls-Generator TIG verbunden, dem vom Oszillator OSZ ein Referenzfrequenzsignal mcl zugeführt wird. Der Schalter S1, der Gebührenimpuls-Generator TIG, der Rufspannungsgenerator RG und der Tontasten- und Impulswahl-Empfänger TTW/IMP-E sind für Steuerzwecke bzw. für den Datenverkehr über den Prozessorbus PB mit dem Prozessor MC verbunden. Durch den Prozessor MC wird das Teilungsverhältnis des mit dem Oszillator OSZ verbundenen Gebührenimpuls-Generators TIG festgelegt. Aus dem vom Oszillator OSZ zugeführten Referenzfrequenzsignal mcl wird durch entsprechende Teilung für die Gebührenimpulse eine Frequenz f1 (z.B. 12 kHz) erzeugt. Die Gebührenimpulse können, nebst durch Teilung aus einer Hauptfrequenz, auch softwaremässig generiert werden. Durch die Betätigung des Schalters S1 (Schalter S2 für Baugruppe UF2a ist nicht dargestellt) werden die entsprechenden Signale der Leitungsbaugruppe SLIC zugeführt. Vom Tontasten- und Impulswahl-Empfänger TTW/IMP-E werden die vom Endgerät TE21 erzeugten Wählsignale über den Prozessorbus PB dem Prozessor MC zugeführt. Der Tontasten- und Impulswahl-Empfänger TTW/IMP-E lässt sich wahlweise software- oder hardwaremässig realisieren. Der Aufbau der Verbindung erfolgt, falls ein freier B-Kanal vorhanden ist, in Zusammenarbeit zwischen dem Prozessor MC und dem Koppelnetz MTS. Falls das analoge Endgerät TE21 bzw. TE22 über Sonderfunktionstasten (z.B. # (Raute) und/oder * (Stern)) verfügt, können vom Endgerät TE21 bzw. TE22 Instruktionen an den Prozessor MC übertragen werden. Beispielsweise können dem Prozessor MC die Rufnummern der ab-Schnittstellen, der Gerätetyp mit der HLC (High Layer Compatibility) Information und die gewünschte Notbetriebsart (Notbetrieb über ab- oder S-Schnittstelle oder kein Notbetrieb) angegeben oder Testsequenzen aufgerufen werden. Ferner können für die analogen Endgeräte TE2X anhand der Sonderfunktionstasten dieselben Leistungsmerkmale realisiert werden, wie mit den obenerwähnten Endgeräten.

Die Leitungsbaugruppe SLIC ist als integrierter Baustein erhältlich (z.B.: Harris HC-5502A). Ebenso wird die Wandlerbaugruppe COFI als integrierte Schaltung auf dem Markt angeboten (z.B. Siemens PEB 2060). Die Leitungsbaugruppe SLIC erfüllt die klassischen BORSCHT-Funktionen (Teilnehmer-Speisung, Überspannungsschutz, der Ruf-Steuerung, der Schleifenüberwachung und Signalisierung) mit Ausnahme der Analog/Digital-Wandlung (Coding), die in der Wandlerbaugruppe COFI ausgeführt wird. Durch die Schleifenüberwachung wird beim Abheben des Hörers über den Prozessorbus PB oder eine separate Leitung ein Meldesignal shd1 (switch hook detection) an den Prozessor MC abgegeben. Der Leitungsbaugruppe SLIC folgt die Wandlerbaugruppe COFI (Codec Filter); die zur Umwandlung des analogen Teilnehmersignals in ein PCM-Digitalsignal und umgekehrt sowie zur Bandbreitenbegrenzung und Filterung dient. Frequenzgang, Impedanzanpassung und Verstärkung/Dämpfung dieser Baugruppe sind in bevorzugten Ausführungsformen durch den Prozessor MC programmierbar.

Beschrieben werden bevorzugte Ausführungsformen der Baugruppen SLIC und COFI ferner in Samuel Hämmerli, Bauteile-Technologie im System ALBIS-ECS 10 000, Siemens-Albis-Berichte 40 (1988), Heft 1/2, Seiten 25 - 29 (s. u.a. Bild 2 und Bild 3).

Das IOM2-Bussystem besteht aus einer Bittakt- und einer Frametakt- sowie zwei Datenleitungen, von denen jede für den Datenverkehr in eine Richtung vorgesehen ist. Die dem Fachmann bekannte IOM-Schnittstelle wird z.B. in A. Kanbach / A. Körber, ISDN - Die Technik, Hüthig Verlag, Heidelberg 1990, auf Seiten 260 - 266 beschrieben. Vorzugsweise wird für das erste Bussystem IOM2 die IOM2-Schnittstelle (IOM Revision 2) verwendet, die als Weiterentwicklung aus der IOM - 1 - Schnittstelle entstand. Besonders vorteilhaft bei dieser Schnittstelle ist, dass Informationen der mit dem IOM2-Bussystem verbundenen Bausteine untereinander ausgetauscht werden können, ohne dass die B-Kanäle in Anspruch genommen werden.

Die Echokompensationsbaugruppe IEC und die S-Schnittstellen-Baugruppe SBCX lassen sich ferner durch die handelsüblichen Bausteine Siemens PEB 2091 (U-Schnittstellen-Baustein) bzw. Siemens PEB 2081 (S-Schnittstellen-Baustein) realisieren.

Zur Vermeidung von Kollisionen im D-Kanal, die auftreten, falls die digitalen Endgeräte TE11, ..., TE16 gleichzeitig einen Verbindungsaufbau initialisieren, ist die bekannte D-Kanal Zugriffssteuerung vorgesehen, wie sie in A. Kanbach / A. Körber, ISDN - Die Technik, Hüthig Verlag, Heidelberg 1990, auf Seiten 105-109 beschrieben ist.

Zur Vermeidung von Kollisionen im D-Kanal, die auftreten, falls digitale und analoge Endgeräte TE11, ..., TE16 und TE21, ..., TE24 gleichzeitig einen Verbindungsaufbau initialisieren, ist vorgesehen, dass jeweils nur ein einziges Endgerät TE auf den D-Kanal zugreifen kann. Dies wird durch eine für jedes Endgerät TE verwendete Kollisions-Erkennung vorgesehen, die durch eine Reflektion der gesendeten Signalisierungsdaten in einem Echo-Kanal ermöglicht wird. Zur Vermeidung von Kollisionen beim Verbindungsaufbau für ein analoges Endgerät TE21, TE22 überwacht die S-Schnittstellenbaugruppe SBCX die auf dem D-Kanal eintreffenden Daten. Beim Eintreffen eines D-Kanal-requests (Anfrage zur Zugriffserlaubnis) vom Koppelnetz MTS gibt die S-Schnittstellenbaugruppe SBCX dem Koppelnetz MTS die Berechtigung auf den D-Kanal zuzugreifen, falls sie den D-Kanal selbst nicht benutzt. Gleichzeitig werden durch die S-Schnittstellenbaugruppe SBCX alle zugehörigen digitalen Endgeräte TE11, ..., TE16 daran gehindert, auf den D-Kanal zuzugreifen. Dies geschieht, indem der E-Kanal (Echo-Kanal) auf Null gesetzt wird. Das Koppelnetz MTS ist daher in der Lage, einen HDLC-Rahmen an den D-Kanal abzugeben, ohne dass eine Kollision auftritt. Aufgrund der abgegebenen Signalisierungsdaten wird ein Verbindungsaufbau für die analogen Endgeräte ermöglicht, wie er z.B. in A. Kanbach / A. Körber, ISDN - Die Technik, Hüthig Verlag, Heidelberg 1990, auf Seiten 73 - 75 beschrieben ist.

## Patentansprüche

1. Netzabschlusseinrichtung (NT) für insbesondere mit Sonderfunktionstasten versehene digitale und/oder analoge Endgeräte (TE), welche Netzabschlusseinrichtung (NT) enthält:
a) eine Echokompensationsbaugruppe (IEC) zum Anschluss an eine U-Schnittstelle (U-SST) eines ISDN-Fernmeldenetzes;
b) ein erstes mit der Echokompensationsbaugruppe (IEC) verbundenes Bussystem (IOM2);
c) ein Prozessorsystem (PCS),
d) eine an ein weiteres Bussystem (SB) angeschlossene S-Schnittstellenbaugruppe (SBCX) zum Anschluss digitaler Endgeräte (TE),
**gekennzeichnet durch** ein an das erste Bussystem (IOM2) angeschlossenes, über ein zweites Bussystem (PB) mit dem Prozessorsystem (PCS) verbundenes und über das weitere Bussystem (SB) mit der S-Schnittstellen-Baugruppe (SBCX) verbundenes Koppelnetz (MTS) zum Durchschalten von jeweils Sprachkanälen (B) und Signalisierinformation (D) von und zu angeschlossenen digitalen Endgeräten (TE) sowie Signalisierinformation (D) vom und zum Prozessorsystem (PCS).

2. Netzabschlusseinrichtung nach Anspruch 1, **dadurch gekennzeichnet**, dass ein für die Bildung von Konferenzgesprächen vorgesehener und vom Prozessorsystem (PCS) gesteuerter Konferenzbaustein (CONF) mit dem Koppelnetz (MTS) verbunden (HWY) ist.

3. Netzabschlusseinrichtung nach Anspruch 1 oder 2, **dadurch gekennzeichnet,** dass an das weitere Bussystem (SB) eine ab-Schnittstellenbaugruppe (LIF1a, LIF2a) zum Anschluss analoger Endgeräte (TE) angeschlossen ist und dass das Koppelnetz (MTS) geeignet ist, jeweils Sprachkanäle (B) und Signalisierinformation (D) von und zu angeschlossenen analogen Endgeräten (TE) sowie Signalisierinformation (D) vom und zum Prozessorsystem (PCS) zu schalten.

4. Netzabschlusseinrichtung nach Anspruch 1 oder 2, **dadurch gekennzeichnet,** dass mit dem Prozessorsystem (PCS) die S-Schnittstellenbaugruppe (SBCX) mittels Konfigurationsdaten programmierbar ist.

5. Netzabschlusseinrichtung nach Anspruch 3, **dadurch gekennzeichnet**, dass mit dem Prozessorsystem (PCS) die S-Schnittstellenbaugruppe (SBCX) mittels Konfigurationsdaten programmierbar ist.

6. Netzabschlusseinrichtung nach Anspruch 3 oder 5, **dadurch gekennzeichnet,** dass die ab-Schnittstellen-Baugruppe (LIF1a, LIF2a) enthält: eine über Leitungen (shd1) mit dem Prozessorsystem (PCS) gekoppelte Leitungsbaugruppe (SLIC) ; eine mit der Leitungsbaugruppe (SLIC) und dem Prozessorsystem (PCS) gekoppelte Wandlerbaugruppe (COFI); einen vom Prozessorsystem (PCS) gesteuerten, von einem Oszillator (OSZ) ein Referenzfrequenzsignal (mcl) erhaltenden Gebührenimpuls-Generator (TIG), einen vom Prozessorsystem (PCS) betätigter, mit dem Gebührenimpuls-Generator (TIG) und der Leitungsbaugruppe (SLIC) gekoppelter Schalter (S1; S2), wobei ein vom Prozessorsystem (PCS) gesteuerter über Leitungen (rs1, rs2) mit der Leitungsbaugruppe (SLIC) gekoppelter, vorzugsweise jeweils ein Signal, das beim Starten und Stoppen jeweils beim Nulldurchgang beginnt bzw. endet, abgebender Rufsignalgenerator (RG) mit der Leitungsbaugruppe (SLIC) gekoppelt ist und wobei das Referenzsignal vom Gebührenimpuls-Generator (TIG) entsprechend den Instruktionen vom Prozessorsystem (PCS) teilbar und über die Leitungsbaugruppe (SLIC) an die angeschlossenen analogen Endgeräte (TE21, TE22) abgebbar ist.

7. Netzabschlusseinrichtung nach Anspruch 6, **dadurch gekennzeichnet**, dass das Prozessorsystem (PCS) über das zweite Bussystem (PB) oder direkte Befehlsleitungen zur Abgabe von Power-up- und Power-down-Signalen an die Leitungsbaugruppen (SLIC), die Wandler-Baugruppen (COFl), den Rufsignalgenerator (RG) und/oder an die S-Schnittstellen-Baugruppe (SBCX) angeschlossen ist.

## Claims

1. Network terminating equipment (NT) for digital and/or analogue terminals (TE) provided, in particular, with special function keys, said network terminating equipment (NT) containing:
a) an echo compensation assembly (IEC) for connection to a U interface (U-SST) in an ISDN telecommunication network;
b) a first bus system (IOM2), connected to the echo compensation assembly (IEC);
c) a processor system (PCS),
d) an S interface assembly (SBCX), connected to a further bus system (SB), for connecting digital terminals (TE),
characterized by a switching matrix (MTS) which is connected to the first bus system (IOM2), is connected to the processor system (PCS) via a second bus system (PB) and is connected to the S interface assembly (SBCX) via the further bus system (SB) for the purpose of switching through respective voice channels (B) and signalling information (D) from and to connected digital terminals (TE) and also signalling information (D) from and to the processor system (PCS).

2. Network terminating equipment according to Claim 1, characterized in that a conference module (CONE) which is provided for forming conference calls and is controlled by the processor system (PCS) is connected (HWY), to the switching matrix (MTS).

3. Network terminating equipment according to Claim 1 or 2, characterized in that an ab interface assembly (LIF1a, LIF2a) for connecting analogue terminals (TE) is connected to the further bus system (SB), and in that the switching matrix (MTS) is suitable for switching respective voice channels (B) and signalling information (D) from and to connected analogue terminals (TE) and also signalling information (D) from and to the processor system (PCS).

4. Network terminating equipment according to Claim 1 or 2, characterized in that the processor system (PCS) can be used to program the S interface assembly (SBCX) using configuration data.

5. Network terminating equipment according to Claim 3, characterized in that the processor system (PCS) can be used to program the S interface assembly (SBCX) using configuration data.

6. Network terminating equipment according to Claim 3 or 5, characterized in that the ab interface assembly (LIF1a, LIF2a) contains: a line assembly (SLIC) coupled to the processor system (PCS) via lines (shdl); a converter assembly (COFI) coupled to the line assembly (SLIC) and to the processor system (PCS); a charge-pulse generator (TIG) which is controlled by the processor system (PCS) and obtains a reference frequency signal (mcl) from an oscillator (OSZ); a switch (S1; S2) which is actuated by the processor system (PCS) and is coupled to the charge-pulse generator (TIG) and to the line assembly (SLIC), with a call signal generator (RG) which is controlled by the processor system (PCS), is coupled to the line assembly (SLIC) via lines (rs1, rs2) and preferably outputs a respective signal which starts and ends at the respective zero crossing when starting and stopping being coupled to the line assembly (SLIC), and with the reference signal being able to be divided by the charge pulse generator (TIG) on the basis of the instructions from the processor system (PCS) and being able to be output to the connected analogue terminals (TE21, TE22) via the line assembly (SLIC).

7. Network terminating equipment according to Claim 6, characterized in that the processor system (PCS) is connected to the line assemblies (SLIC), to the converter assemblies (COFI), to the call signal generator (RG) and/or to the S interface assembly (SBCX) via the second bus system (PB) or direct command lines for the purpose of outputting power-up and power-down signals.

## Revendications

1. Terminaison (NT) de réseau pour des terminaux (TE) numériques et/ou analogiques qui sont munis notamment de touches fonctionnelles spéciales, la terminaison (NT) de réseau comportant :
a) un module (IEC) d'annulation d'écho pour le raccordement à une interface (U-SST) U d'un réseau de télécommunication (RNIS) ;
b) un premier système (IOM2) de bus relié au module (IEC) d'annulation d'écho ;
c) un système (PCS) de processeur,
d) un module (SBCX) d'interface (S) raccordé à un système (SB) de bus supplémentaire pour le raccordement de terminaux (TE) numériques,
caractérisée par un réseau (MTS) de connexion, raccordé au premier système (IOM2) de bus, relié par l'intermédiaire d'un deuxième système (PB) de bus au système (PCS) de processeur et relié par l'intermédiaire du système (SB) de bus supplémentaire au module (SBCX) d'interface (S), pour l'interconnexion de voies (B) pour la parole et d'information (D) de signalisation depuis des terminaux (TE) numériques raccordés et vers ces terminaux ainsi que d'information (D) de signalisation depuis le système (PCS) de processeur et vers ce processeur.

2. Terminaison de réseau suivant la revendication 1, caractérisée en ce qu'un composant (CONF) de conférence prévu pour la formation de conversations de conférence et commandé par le système (PCS) de processeur est relié (HWY) au réseau (MTS) de connexion.

3. Terminaison de réseau suivant la revendication 1 ou 2, caractérisée en ce qu'il est raccordé au système (SB) de bus supplémentaire un module (LIF1a, LIF2a) d'interface (AB) pour le raccordement de terminaux (TE) analogiques et en ce que le réseau (MTS) de connexion est adapté à connecter des voies (B) pour la parole et de l'information (D) de signalisation depuis des terminaux (TE) analogiques raccordés et vers ces terminaux ainsi que de l'information (D) de signalisation depuis le système (PCS) de processeur et vers ce système.

4. Terminaison de réseau suivant la revendication 1 ou 2, caractérisée en ce que le module (DBCX) d'interface (S) peut être programmé par le système (PCS) de processeur au moyen de données de configuration.

5. Terminaison de réseau suivant la revendication 3, caractérisée en ce que le module (DBCX) d'interface (S) peut être programmé par le système (PCS) de processeur au moyen de données de configuration.

6. Terminaison de réseau suivant la revendication 3 ou 5, caractérisée en ce que le module (LIF1a, LIF2a) d'interface (AB) contient un module (SLIC) de ligne couplé par l'intermédiaire de lignes (SHD1) au système (PCS) de processeur ; un module (COFI) de convertisseur couplé au module (SLIC) de ligne et au système (PCS) de processeur ; un générateur (TIG) d'impulsion de taxation commandé par le système (PCS) de processeur, recevant d'un oscillateur (OSZ) un signal (MCL) de fréquence de référence, un interrupteur (S1; S2) actionné par le système (PCS) de processeur, couplé au générateur (TIG) d'impulsion de taxation et au module (SLIC) de ligne, un générateur (RG) de signal d'appel, commandé par le système (PCS) de processeur, couplé par l'intermédiaire de lignes (RS1, RS2) au module (SLIC) de ligne et de préférence fournissant chaque fois un signal qui lors du départ et de l'arrêt commence, respectivement finit au passage au zéro, étant couplé au module (SLIC) de ligne et le signal de référence pouvant être divisé par le générateur (TIG) d'impulsion de taxation en fonction des instructions du système (PCS) de processeur et pouvant être fourni par l'intermédiaire du module (SLIC) de ligne aux terminaux (TE21, TE22) analogiques raccordés.

7. Terminaison de réseau suivant la revendication 6, caractérisée en ce que le système (PCS) de processeur est raccordé par l'intermédiaire du deuxième système (PB) de bus ou de ligne directe de transmission d'instruction pour la fourniture de signaux Power-up et Power-down au module (SLIC) de ligne, au module (COFI) de convertisseur, au générateur (RG) de signal d'appel et/ou au module (SBCX) d'interface S.
